(19) Europäisches Patentamt
European Patent Office
Office européen des brevets

(11) **EP 2 327 905 A2**

(12) **EUROPEAN PATENT APPLICATION**

(43) Date of publication:
**01.06.2011 Bulletin 2011/22**

(51) Int Cl.:
**F16F 15/03** (2006.01)

(21) Application number: **10189805.4**

(22) Date of filing: **03.11.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.11.2009 US 627549**

(71) Applicant: **ITT Manufacturing Enterprises, Inc.**
**Wilmington, Delaware 19801 (US)**

(72) Inventors:
• **Vallone, Philipp**
**Honeoye Falls, NY 14472 (US)**

• **Gates, Douglas William**
**Rochester, NY 14610 (US)**
• **Fasick, John Craig**
**Lima, NY 14485 (US)**
• **Brewen, Alan Thomas**
**Rochester, NY 14534 (US)**

(74) Representative: **Dreiss**
**Patentanwälte**
**Gerokstrasse 1**
**70188 Stuttgart (DE)**

(54) **Frequency tunable magnetic damping apparatus**

(57)    A damping apparatus is disclosed comprising at least one pair of magnets and a conducting member. The at least one pair of magnets define a gap therebetween. The conducting member is coupled to a payload and positioned within the gap. The conducting member is configured to vibrate in response to a vibration of the payload. The conducting member comprises a conducting material. Vibration of the conducting member generates eddy currents in the conducting member, and the eddy currents generate a frequency-dependent damping force. The frequency-dependent damping force is adjustable based on the conducting material and a thickness of the conducting member. The conducting material and the thickness are selected to adjust the frequency-dependent damping force.

Figure 1A

Printed by Jouve, 75001 PARIS (FR)

**Description**

FIELD OF THE INVENTION

This invention relates to the field of linear vibration damping apparatus, and more particularly to magnetic dampers.

BACKGROUND OF THE INVENTION

Linear dampers are devices designed to provide absorption of shock and smooth deceleration in linear motion applications. Dampers provide shock absorption through the application of a damping force in the direction of the linear motion. Dampers may generate the damping force from a variety of means. Dampers may be mechanical (e.g., elastomeric or wire rope isolators), fluid (e.g. gas, air, hydraulic), or even magnetic (e.g. through magnetically induced eddy currents).

Magnetic dampers provide a linear damping element in a compact form. Magnetic dampers do not suffer from certain problems associated with hydraulic dampers including friction or leaking of fluids. For typical non-magnetic type dampers (e.g., fluid dampers) the damping coefficient is constant over a wide frequency range, Magnetic dampers exhibit a damping coefficient that decreases with an increase in the vibration frequency for frequency greater than a critical frequency. An exemplary magnetic damper is disclosed in U.S. Patent Application 11/304,974 to Brennan et al., which is included herein by reference.

SUMMARY OF THE INVENTION

Aspects of the present invention are related to magnetic damping apparatus and methods. In accordance with one aspect of the present invention, a damping apparatus is disclosed. The damping apparatus includes at least one pair of magnets and a conducting member. The at least one pair of magnets define a gap therebetween. The conducting member is coupled to a payload and positioned within the gap. The conducting member is configured to vibrate in response to a vibration of the payload. The conducting member comprises a conducting material. Vibration of the conducting member generates eddy currents in the conducting member, and the eddy currents generate a frequency-dependent damping force. The frequency-dependent damping force is adjustable based on the conducting material and a thickness of the conducting member. The conducting material and the thickness are selected to adjust the frequency-dependent damping force.

In accordance with another aspect of the present invention, a damping apparatus is disclosed. The damping apparatus includes at least one pair of magnets and a conducting vane. The at least one pair of magnets define a gap therebetween. The conducting vane is coupled to a payload and positioned within the gap. The conducting vane is configured to vibrate in response to a vibration of the payload. The conducting vane comprises a plurality of layers of conducting material. Vibration of the conducting vane generates eddy currents in at least one of the layers of conducting material, and the eddy currents generate a frequency-dependent damping force. The frequency-dependent damping force is adjustable based on the materials and the thicknesses of the plurality of layers of conducting material. The materials and the thicknesses of the plurality of layers of conducting material are selected to adjust the frequency-dependent damping force.

In accordance with yet another aspect of the present invention, a method of forming a conducting member for use in a magnetic damping apparatus is disclosed. The method includes selecting a desired damping coefficient for one or more frequencies of vibration of the conducting member, providing a conducting material for the conducting member based on the desired damping coefficient, and forming the conducting material to a predetermined thickness based on the desired damping coefficient.

The invention refers to a damping apparatus comprising at least one pair of magnets defining a gap therebetween; and a conducting member coupled to a payload and positioned within the gap, the conducting member configured to vibrate in response to a vibration of the payload, and the conducting member comprising a conducting material, wherein vibration of the conducting member generates eddy currents in the conducting member, the eddy currents generating a frequency-dependent damping force, the frequency-dependent damping force is adjustable based on the conducting material and a thickness of the conducting member, and the conducting material and the thickness are selected to adjust the frequency-dependent damping force. In the following preferable embodiments are described. The conducting member comprises a first layer of a first conducting material having a first thickness; and a second layer of a second conducting material having a second thickness, the second layer adjacent the first layer. The first and second conducting materials and the first and second thicknesses are selected to lower the frequency-dependent damping force above a predetermined frequency of vibration of the payload. The predetermined frequency of vibration of the payload is the resonant frequency of the payload. The first conducting material has a first resistivity; the second conducting material has a second resistivity different from the first resistivity. The second layer comprises one or more outer layers surrounding the inner layer, each outer layer comprising a different conducting material. The one or more outer layers have different respective thicknesses. The conducting member comprises a plurality of conducting wires, each conducting wire comprising the first layer of the first conducting material and the second layer of the second conducting material. The the conducting member further comprises an insulating layer between the first layer and the second layer. The conducting member comprises a planar inner layer of the first conducting material; and a pair of planar outer layers of the second conducting material, the outer layers of the pair positioned on opposite sides of the inner layer. The conducting member comprises a planar inner layer of the first conducting material; and two or more pairs of planar outer layers, each pair of outer layers comprising a different conducting material, the outer layers of each pair positioned on opposite sides of the inner layer. The two or more pairs of planar outer layers have different respective thicknesses. The conducting member comprises one or more conducting wires. The damping apparatus further comprising a plurality of pairs of magnets defining a plurality of gaps therebetween; and a plurality of conducting members coupled to the payload, each conducting member positioned within one of the plurality of gaps. Each of the plurality of conducting members comprises a respective conducting material; and the respective conducting materials of two or more of the plurality of conducting members are different. Each of the plurality of conducting members has a respective thickness; and the respective thicknesses of two or more of the plurality of conducting members are different.

The invention also refers to a damping apparatus comprising at least one pair of magnets defining a gap therebetween; and a conducting vane coupled to a payload and positioned within the gap, the conducting vane configured to vibrate in response to a vibration of the payload, and the conducting vane comprising a plurality of layers of conducting material, wherein vibration of the conducting vane generates eddy currents in at least one of the layers of conducting material, the eddy currents generating a frequency-dependent damping force, the frequency-dependent damping force is adjustable based on the materials and the thicknesses of the plurality of layers of conducting material, and the materials and the thicknesses of the plurality of layers of conducting material are selected to adjust the frequency-dependent damping force. In the following preferable embodiments are described. The conducting materials and the thicknesses are selected to lower the frequency-dependent damping force above a predetermined frequency of vibration of the payload.

The invention also refers to a method of forming a conducting member for use in a magnetic damping apparatus, comprising the steps of selecting a desired damping coefficient for one or more frequencies of vibration of the conducting member; providing a conducting material for the conducting member based on the desired damping coefficient; and forming the conducting material to a predetermined thickness based on the desired damping coefficient.

BRIEF DESCRIPTION OF THE DRAWINGS

The invention is best understood from the following detailed description when read in connection with the accompanying drawings, with like elements having the same reference numerals. When a plurality of similar elements are present, a single reference numeral may be assigned to the plurality of similar elements with a small letter designation referring to specific elements. When referring to the elements collectively or to a non-specific one or more of the elements, the small letter designation may be dropped. This emphasizes that according to common practice, the various features of the drawings are not drawn to scale. On the contrary, the dimensions of the various features are arbitrarily expanded or reduced for clarity. Included in the drawings are the following figures:

FIGS. 1A and 1B are diagrams of an exemplary damping apparatus in accordance with an aspect of the present invention;

FIGS 2A and 2B are diagrams of the interaction between magnets and a conducting member of the exemplary damping apparatus of FIGS. 1A and 1B;

FIGS. 3 is a diagram of a conducting member of an exemplary damping apparatus in accordance with an aspect of the present invention;

FIGS. 4A and 4B are diagrams of the interaction between magnets and the conducting member of FIG. 3 in an exemplary damping apparatus;

FIG. 5 is a graph of damping rates of five exemplary damping apparatus in accordance with an aspect of the present invention;

FIG. 6 is a diagram of an alternative conducting member of an exemplary damping apparatus in accordance with an aspect of the present invention;

FIG. 7 is a diagram of another alternative conducting member of an exemplary damping apparatus in accordance with an aspect of the present invention;

FIG. 8 is a diagram of the interaction between magnets and the conducting member of FIG. 7 in an exemplary damping apparatus; and

FIG. 9 is a flow chart of exemplary steps for forming a conducting member in accordance with an aspect of the present invention.

DETAILED DESCRIPTION OF THE INVENTION

The present invention may be embodied in any magnetic damping apparatus. Exemplary damping apparatus of the present invention are devices which achieve tunable isolation roll-off with respect to the frequency of the vibration. This results in the improvement in isolation from a vibration source.

For the purpose of describing the function of the present invention, it may be assumed that an instrument or other material is subject to vibration caused by a vibrational force. The instrument subject to vibration may include a first portion (i.e. a base) and a second portion (i.e. a payload) which vibrates relative to the first portion. An exemplary damping apparatus of the present invention may be provided at the base to provide a damping force to the payload and, therefore, decrease the relative vibration. It will be understood, however, that the exemplary damping apparatus may be coupled with any body in which relative vibration is undesirable.

The damping force provided by the exemplary damping apparatus may be applied to applications, such as for example, ground test vibrations, vehicle vibration (i.e. cars, trains, planes, etc.), laboratory and fabrication equipment vibration (i.e. optical tables, micro-lithography and precision machine tools) and ground and space telescope isolation.

In general, exemplary damping apparatus of the present invention include a pair of magnets defining a gap and a conducting member positioned in the gap. Exemplary damping apparatus of the present invention decrease displacement by providing a damping force (e.g. through magnetically induced eddy currents) in opposition of the vibrational force on the payload. The vibrational force from the payload is applied to the conducting member (e.g., conductive vanes) of the damping apparatus, thereby causing the conducting member to vibrate in the gap between the magnets. A damping force is provided to the conducting member by the magnets as the conducting member moves between the magnets. The damping force on the conducting member, therefore, is applied to the payload, and the vibration of the payload is thereby damped.

In the above exemplary apparatus, the damping force on the conducting member is dependent on the shape, size, and type of material making up the conducting member. For example, the damping force on the conducting member may be altered based on (1) the type of conducting materials used and (2) the thickness of the conducting materials used.

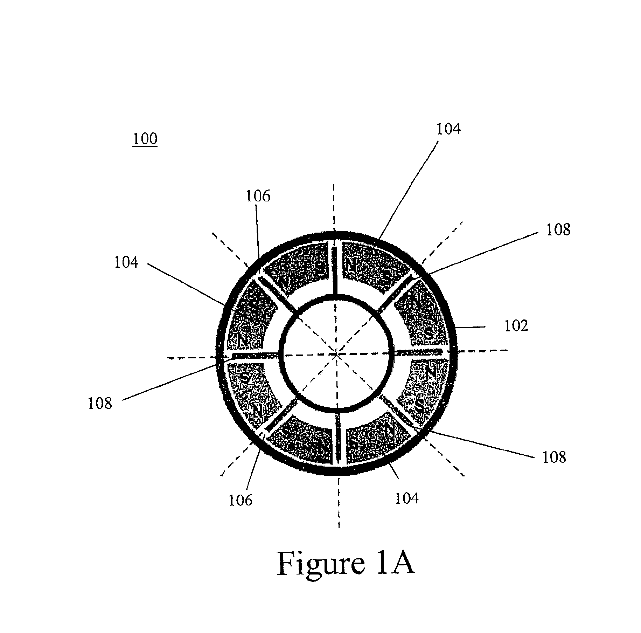

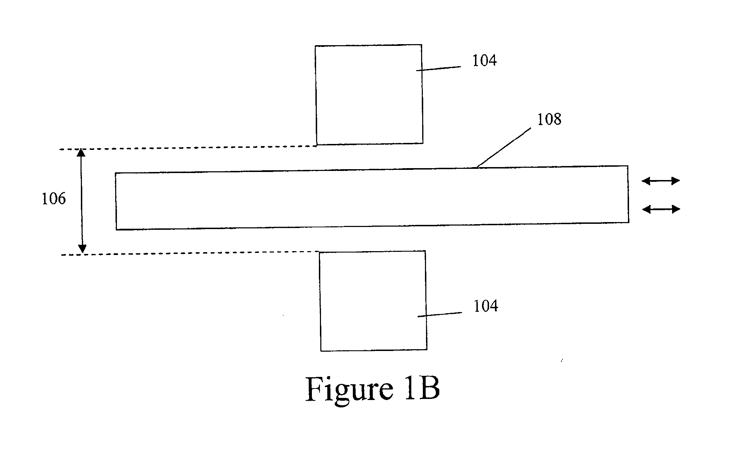

The invention will now be described with regard to the accompanying drawings. FIGS. 1A and 1B are diagrams of an exemplary damping apparatus 100 according to an aspect of the present invention. As described above, damping apparatus 100 may be used to damp the vibration of a payload relative to a base. Damping apparatus 100 includes housing 102, magnets 104, and conducting members 108. Additional details of damping apparatus 100 are now described below.

In an exemplary embodiment, housing 102 is attached to a base (not shown). Housing 102 may include support for the elements of damping apparatus 100, the latter providing the payload with a damping force. As illustrated in FIG. 1A, housing 102 may have a generally cylindrical outer shape. It is contemplated, however, that housing 102 may be formed of any shape to accommodate and support the elements of apparatus 100. The housing 102 may be formed from suitable non-magnetic materials or magnetic materials or a combination of magnetic and non-magnetic materials.

Magnets 104 generate a magnetic field within damping apparatus 100. In an exemplary embodiment, magnets 104 are grouped in one or more pairs to define one or more gaps 106, as illustrated in FIG. 1B. The position of magnets 104 may be fixed within housing 102 and may extend axially through housing 102. As illustrated in FIG. 1A, magnets 104 may be circumferentially arranged to define one or more radial gaps 106 through housing 102. It will be understood, however, that magnets 104 may have any orientation to form gaps 106. Additionally, in an alternative exemplary embodiment, a single magnet 104 may be used. A single magnet 104 may be positioned to provide magnetic flux perpendicular to the face of a conducting member 108.

Pairs of magnets 104 are spaced apart to generate a magnetic field extending between magnets 104, through gap 106. Damping apparatus 100 may include one or more pairs of magnets 104. Multiple pairs of magnets 104 may define multiple gaps 106, or a single longer gap 106. As illustrated in FIGS. 1A and 1B, each gap 106 is configured to receive a conducting member 108. Magnets 104 may be any suitable type of permanent magnets, such as rare earth magnets. Magnets 104 may also be electromagnets. As will be described herein, magnets 104 and conducting members 108 may be arranged interchangeably in arrangement with respect to apparatus 100.

Conducting members 108 extend into gaps 106. In an exemplary embodiment, conducting members 108 are connected to a payload (not shown) and positioned within gaps 106. Conducting members 108 are configured to vibrate in response to a vibration of the payload. For example, conducting members 108 may be directly coupled to the payload and, thereby, receive a direct vibrational force from the payload. Alternatively, conducting members 108 may extend from a rod or another member coupled to the payload. Conducting members 108 then receive an indirect vibrational force from the rod or other member in response to a vibration of the payload. In any embodiment, conducting members 108 may vibrate in any direction within the plane of gap 106 in which they are positioned, as illustrated by the arrows in FIG. 1B.

As illustrated in FIGS. 1A and 1B, conducting members 108 may be substantially flat sheets of conducting material, such as conducting vanes. Further, conducting members may extend radially outward within housing 102, as illustrated in FIG. 1A. It will be understood, however, that conducting members 108 may have any shape and orientation within gaps 106. For example, it is contemplated that magnets 104 may be positioned to define circumferential gaps, in which cylindrical conducting members 108 are positioned.

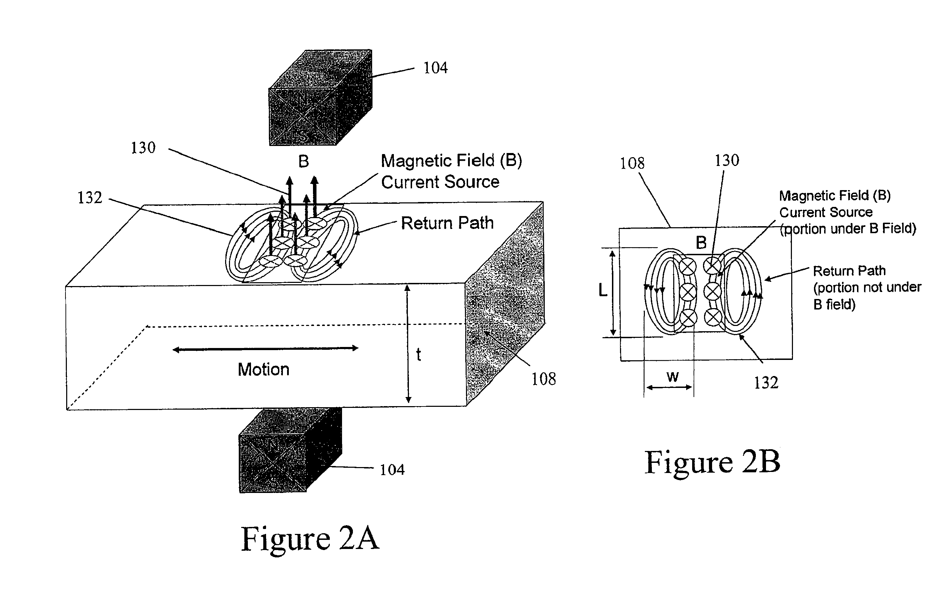

The interaction between magnets 104 and conducting members 108 will now be described with respect to FIGS. 2A and 2B in accordance with an aspect of the present invention. FIGS. 2A and 2B show a perspective and top view, respectively, of damping apparatus 100. As shown, magnets 104 generate a magnetic field through gap 106. A magnetic field (indicated by arrows 130) is formed by magnets 104, which flows through the conducting member 108. The magnetic field may flow through conducting member 108 in a direction substantially orthogonal to the direction of motion of conducting member 108. Any movement of conducting members 108 within the magnetic field induces eddy currents (indicated by loops 132) in conducting member 108. As illustrated in FIGS. 2A and 2B, the eddy currents circulate through conducting member 108 in loops having an approximate circumferential length "2L" and an approximate path width "W/2". Eddy current loops are formed such that a first portion passes through the magnetic field formed in gaps 106 and a second portion connecting both ends of the first portion passes outside the magnetic field formed in gaps 106. The length "2L" and width "W/2" of the eddy current loops are dependent on the distribution of the magnetic field in gaps 106 and the geometry and material properties of conducting member 108.

These eddy currents generate an opposing magnetic field through conducting member 108, which in turn generates a damping force on conducting member 108. The damping force on conducting member 108 may be expressed by the following relationship:

$$F = K_1 \cdot \frac{\dot{x}}{r} \qquad \text{(Equation 1)}$$

where F is the damping force on conducting member 108, $K_1$ is a constant based on the geometry and magnetic field strength and distribution, $\dot{x}$ is the velocity of motion of the conducting member 108 relative to the magnets 104, and r is the resistance of the material in conducting member 108 through which the eddy currents flow. Because the velocity of motion of conducting member 108 is dependent on the frequency of vibration of conducting member 108, it will be understood that the eddy currents generate a frequency-dependent damping force. The damping force generated by the eddy currents has a direction opposite the direction of motion of conducting member 108.

The resistance "r" of conducting member 108 is a function of its geometry and material properties. For example, for an eddy current loop having a length "2L" and width "W/2", as illustrated in FIG. 2B, the resistance in the material through which the eddy currents pass may be expressed as:

$$r = K_2 \cdot \frac{\rho}{t} \qquad \text{(Equation 2)}$$

where "p" is the material's resistivity and "t" is the thickness of the material through which the eddy currents flow and "$K_2$" is a geometry factor which accounts for the shape of the eddy current loop. Combining Equations 1 and 2, the frequency-dependent damping force can be expressed as:

$$F = \frac{K_1}{K_2} \cdot \dot{x} \cdot \frac{t}{\rho} \equiv K \cdot \frac{t}{\rho} \cdot \dot{x} \qquad \text{(Equation 3)}$$

In which the damping coefficient is:

$$C_f = \frac{F}{\dot{x}} = K \cdot \frac{t}{\rho} \qquad \text{(Equation 4)}$$

As described above, the eddy currents flow through the material comprising conducting members 108. However, the depth at which the eddy currents flow generally depends on the vibrational frequency of the conducting members, i.e., the frequency of the generated eddy currents. This is due to a phenomenon known as the "skin effect". Due to the skin effect, as the frequency of a current flowing in a conductor increases, the current becomes more concentrated near the external surface of the conductor. For example, at a relatively low frequency of vibration of conducting member 108, low frequency eddy currents are generated. These low frequency eddy currents do not experience a significant skin effect and therefore essentially flow uniformly throughout the entire thickness of the conducting material. At a relatively high frequency of vibration of conducting member 108, however, high frequency eddy currents are generated. These high frequency eddy currents experience a significant skin effect and are concentrated near the surface of the conductor.

The degree to which the eddy currents concentrate near the surface depends on the frequency of the eddy currents. Generally, for plane wave electromagnetic field excitation, the eddy current density decreases exponentially with depth. The depth that eddy currents penetrate into a material is affected by the frequency of the excitation, the electrical conductivity, and magnetic permeability of the material. The depth of penetration decreases with increasing frequency, decreasing resistivity, and increasing magnetic permeability. The depth at which eddy current density has decreased to 1/e, or about 37% of the surface density, is called the standard depth of penetration ("d"). This standard depth of the material through which the eddy currents flow, as a function of the frequency of vibration, may be expressed as:

$$d = \sqrt{\rho / (\pi \cdot f \cdot \mu)} \qquad \text{(Equation 5)}$$

where "d" is the standard depth of the eddy current, "f" is the frequency of vibration of the material in Hertz, and "$\mu$" is the magnetic permeability of the material.

When the standard depth of eddy currents is much greater than the full thickness "t" of the conducting material, the damping force on the material is given according to Equation 3. This occurs when the frequency of vibration of the conducting member is sufficiently low. Accordingly, for a sinusoidal vibration of the conducting member (e.g., where x (T) = $\alpha \cdot \sin(2 \cdot \pi \cdot f \cdot T)$), the frequency-dependent damping force may be expressed as:

$$F = K \cdot \frac{t}{\rho} \cdot a \cdot (2 \cdot \pi \cdot f) \cdot \cos(2 \cdot \pi \cdot f \cdot T) \quad \text{for frequency where d} \gg \text{t} \qquad \text{(Equation 6)}$$

where "a" is the amplitude of the vibrational motion of the conducting member and "T" is time.

In general, however, when the frequency is such that the standard depth is not much greater than the thickness of the conducting member, the corresponding frequency-dependent damping force is reduced by a factor "R":

$$F = R \cdot K \cdot \frac{t}{\rho} \cdot a \cdot (2 \cdot \pi \cdot f) \cdot \cos(2 \cdot \pi \cdot f \cdot T) \quad \text{for frequency where } 0 < \text{d} \approx \text{t} \qquad \text{(Equation 7)}$$

where the factor "R" depends on the standard depth d and is expressed as:

$$R = \frac{1}{4} \cdot \left( -\frac{d}{t} \cdot e^{-2t/d} + 2 \cdot e^{-t/d} + \frac{d}{t} \right) \qquad \text{(Equation 8)}$$

When the standard depth is much larger than the thickness the value of "R" can be approximated by unity, in which case Equation 7 becomes the same as Equation 6. As the frequency gets large and the standard depth becomes small the value of "R" becomes less than unity and approaches zero monotonically with increasing frequency. This approach to zero for high frequency and therefore small values of standard depth "d" can be approximated by:

$$R \approx \frac{d}{4 \cdot t} = \frac{1}{4 \cdot t} \sqrt{\frac{\rho}{\pi \cdot f \cdot \mu}} \quad \text{for frequency where } 0 < d < 4 \cdot t \qquad \text{(Equation 9)}$$

Thus, in general, the frequency-dependent damping force can be approximated as

$$F = R \cdot K \cdot \frac{t}{\rho} \cdot a \cdot (2 \cdot \pi \cdot f) \cdot \cos(2 \cdot \pi \cdot f \cdot T) \qquad \text{(Equation 10)}$$

where

$$R \approx minimum\left\{ 1, \frac{1}{4 \cdot t} \sqrt{\frac{\rho}{\pi \cdot f \cdot \mu}} \right\} \qquad \text{(Equation 11)}$$

Thus, when the frequency of vibration is sufficiently high resulting in the eddy current migrating to the surface, the damping force on conducting member 108 is diminished with increasing frequency. From Equations 4, 10, and 11 the frequency dependant damping coefficient "$C_f$" is therefore approximately given by:

$$C_f = \frac{F}{\dot{x}} = R \cdot K \cdot \frac{t}{\rho} \approx K \cdot \frac{t}{\rho} \cdot minimum\left\{ 1, \frac{1}{4 \cdot t} \sqrt{\frac{\rho}{\pi \cdot \mu \cdot f}} \right\} \qquad \text{(Equation 12)}$$

It is therefore seen from Equation 12 that the damping coefficient varies with frequency as determined by the "dimensionless shape profile" defined by the factor "R", as given by Equation 8 or approximately as given by Equation 11. It is also seen from Equation 12 that the scaling factor that determins the "magnitude" of the damping coefficient is given by the product, K t / p. This scaling factor is thus seen to depend on the thickness and resistivity as well as the factor K which depends on the strength and area of the magnetic field intersecting the conductor.

The damping force generated in a material along a range of frequencies may be understood with reference to an exemplary conducting material having a thickness "t". The conducting material may have a critical frequency "$f_{cr}$", below which (pursuant to Equation 5) the standard depth of eddy currents "d" in the conducting material effectively becomes substantially greater than the thickness "t" of the conducting material such that in Equation 12

$$\frac{1}{4 \cdot t} \sqrt{\frac{\rho}{\pi \cdot f_{cr} \cdot \mu}} = 1 \qquad \text{(Equation 13)}$$

which corresponds with a critical frequency given by

$$f_{cr} = \frac{1}{16 \cdot t^2} \cdot \frac{\rho}{\pi \cdot \cdot \mu} \qquad \text{(Equation 14)}$$

For a certain frequency of vibration "$f_1$" below the critical frequency "$f_{cr}$", the eddy currents may flow at a standard depth "$d_1$" substantially greater than the thickness "t". In this example, the entire thickness of the conducting material experiences essentially uniform eddy currents, and the damping coefficient is constant, at its maximum value as set forth in Equation 4. For a certain frequency "$f_2$" above the critical frequency "$f_{cr}$", however, the eddy currents may flow at a standard depth "$d_2$" not substantially greater than the thickness "t". In this example, less than the entire thickness of the conducting material effectively experiences substantial eddy currents, due to the skin effect. Accordingly, as the frequency of the eddy current increases above the critical frequency, the damping coefficient may decrease along with the decreasing standard depth, as set forth in Equation 12.

From Equations 12 and 14 it is apparent that the critical frequency "$f_c$," of the exemplary conducting material is dependent on the thickness "t" of the material, and on the resistivity "p" and magnetic permeability "$\mu$" of the material. Accordingly, the frequency-dependent damping force generated by the relative movement of conducting member 108 within gaps 106 is adjustable based on the thickness of the conducting material and the specific material selected for conducting member 108.

Aspects of the present invention are directed to selecting the critical frequency of a conducting member, and optimizing a frequency-dependent damping force response of a conducting member above its critical frequency. Accordingly, the structure of conducting member 108 will now be described with reference to the above examples.

Conducting member 108 may be formed from a single, solid piece of conducting material. As described above with the exemplary conducting member, the frequency-dependent damping force generated by the relative movement of conducting member 108 within gaps 106 may be adjusted based on the conducting material selected for conducting member 108 and the thickness of the conducting material. Specifically, for a given thickness of conductor member 108, the conducting material of conducting member 108 may be selected so that the material's resistance and magnetic permeability correspond to the desired critical frequency of conducting member 108. Additionally, for a given material used to construct conductor member 108, the thickness of conducting member 108 may be selected to correspond to the desired critical frequency. As set forth above, below the desired critical frequency of vibration, conducting member 108 may experience a substantially constant damping force, while above the desired critical frequency of vibration, conducting member 108 may experience a diminishing damping force.

Additionally, as illustrated in FIG. 1A, damping apparatus 100 may include multiple conducting members 108. In one embodiment, conducting members 108 may be formed from the same materials in the same shapes. Thus, all of the conducting members of damping apparatus 100 may have a uniform damping response to vibration of the payload.

In the alternative, conducting members 108 of damping apparatus may be configured to have different critical frequencies. In an exemplary embodiment, conducting members 108 may be formed from different conducting materials. In another exemplary embodiment, conducting members 108 may have different thicknesses. Accordingly, the critical frequencies of the conducting members 108 may be selected to optimize the frequency-dependent damping response of damping apparatus 100 over a broad range of frequencies of vibration.

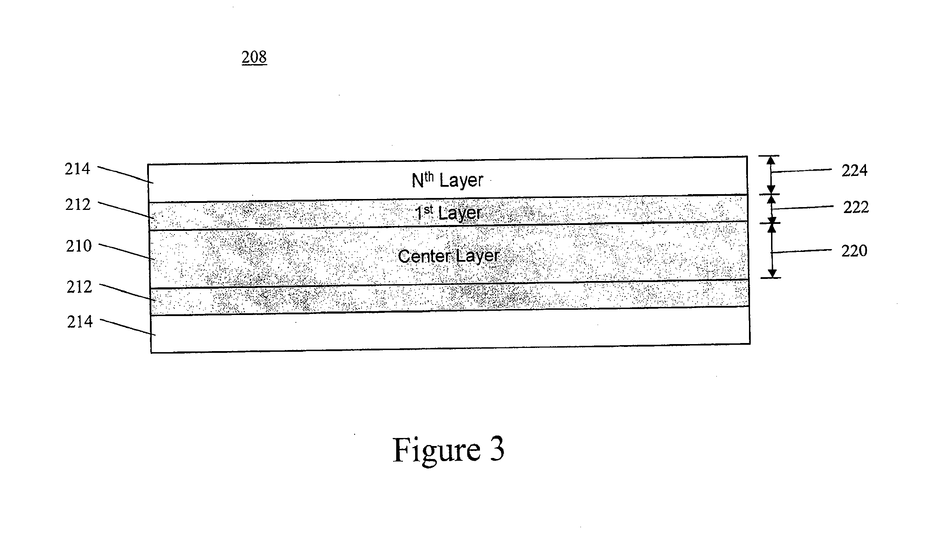

FIG. 3 is a diagram of another conducting member 208 for use in a damping apparatus in accordance with aspects of the present invention. The conducting member 208 may be coupled to a payload subject to vibration.

As illustrated, a conducting member 208 is formed from layers of conducting material. In an exemplary embodiment, conducting member 208 includes inner or center layer 210, first outer layer 212, and last outer layer 214. Each conducting layer 210, 212, 214 of conducting member 208 may be formed from different conducting materials. Optionally, conducting member 208 may be layered symmetrically, such that it includes a center layer 210 formed from first conducting material, a pair of outer layers 212 formed on either side of center layer 210 from a second conducting material, and a pair of outermost layers 214 formed on either side of outer layers 212 from a third conducting material. Conducting member 208 may also be formed from conducting layers 210, 212, 214 which are in electrical contact with each other. Conducting layers 210, 212, 214 thereby allow passage of current from one layer to another through the thickness of conducting member 208.

Each layer 210, 212, 214 may have a predetermined thickness 220, 222, 224, respectively. Thicknesses 220, 222, 224 may be similar in size. As described above with respect to solid conducting member 108, the thicknesses 220, 222, 224 of layers 210, 212, 214, respectively, may be selected (along with the material) to alter the damping response of conducting member 208 over a range of frequencies. Layers 210, 212, 214 of conducting member 208 may be formed from certain conducting materials or combinations of those conducting materials. Exemplary conducting materials for layers 210, 212, 214 may include copper, nickel, aluminum, or beryllium. As described above with respect to solid conducting member 108, the conducting materials may be selected to alter the damping response of conducting member 208 over a range of frequencies. Particular configurations of conducting member 208 will be described herein.

Conducting member 208 may be formed from different processes depending on the thicknesses 220, 222, 224 of conducting layers 210, 212, 214, respectively. For example, for a conducting member 208 having relatively thick layers 210, 212, 214 (i.e. > 500 $\mu$m), conducting member 208 may be formed by clamping, welding, or bonding layers 210, 212, 214 with conductive adhesives. For conducting members 208 having relatively thin conducting layers 210, 212, 214 (i.e. < 500 $\mu$m), conducting member 208 may be formed by electroplating, physical vapor deposition, chemical vapor deposition, or thermal spraying. For conducting members 208 having nano-sized conducting layers 210, 212, 214, the conducting layers may be held together by van der Waals forces.

It will be understood that the number of layers of conducting material shown in FIG. 3 is illustrative and not limiting. It is contemplated that conducting member 208 may have any number of conducting layers, and that the conducting members need not be symmetrically arranged. Although layers 210, 212, 214 are described as having different conducting materials, it will be appreciated that they may be formed from the same conducting material or combination of materials. In general the frequency dependent damping coefficient for a conductor comprised of N layers is given in equation form as

$$C_f = \frac{F}{\dot{x}} = K \cdot \sum_{n-1}^{N} R_n \cdot \frac{t_n}{\rho_n}$$

(Equation 15)

where

   $K$ = constant determined by geometry (similar to that of Equation 2);
   $n$ = layer index;
   $P_n$ = resistivity of $n^{th}$ layer;
   $t_n$ = thickhess of $n^{th}$ layer; and
   $R_n$ = frequency dependent expression (similar to Equation 11) for $n^{th}$ layer.

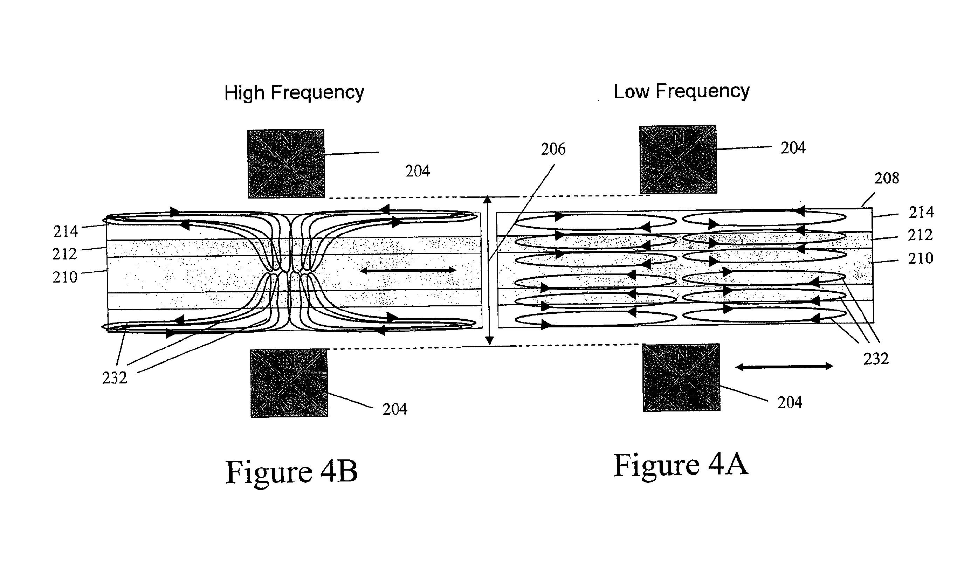

The interaction between magnets 204 and conducting member 208 in an exemplary damping apparatus will now be described with respect to FIGS. 4A and 4B. FIG. 4A shows conducting member 208 vibrating at a relatively low frequency within gap 206 between magnets 204. FIG. 4B shows conducting member 208 vibrating at a relatively high frequency within gap 206 between magnets 204. Additional details of the interaction between magnets 204 and conducting member 208 are now described below.

In an exemplary embodiment, conducting member 208 may vibrate at a certain frequency in response to the vibration of a payload. As described above, movement of conducting member 208 within the magnet field in gap 206 generates eddy currents in conducting member 208 (as indicated by arrows 232). Due to the skin effect, the depth at which eddy currents flow is dependent on the frequency of the eddy currents, and, therefore, dependent on the frequency of vibration of conducting member 208.

For example, conducting member 208 may vibrate at a relatively low frequency, as illustrated in FIG. 4A. Accordingly, eddy current loops in conducting member 208 have a low frequency, allowing the eddy currents to flow through the entire thickness of conducting member 208. This means that eddy currents may flow through the entire thicknesses 220, 222, 224 of each layer 210, 212, 214, respectively, of conducting member 208. In this example, a frequency-dependent damping force may be generated (using the above equations) that is dependent on the thicknesses 220, 222, 224 and resistances and permeabilities of each layer 210, 212, 214.

Alternatively, conducting member 208 may vibrate at a relatively high frequency, as illustrated in FIG. 4B. Accordingly, eddy current loops in conducting member 208 have a high frequency, causing the eddy currents to concentrate near the surface of conducting member 208. As described above, the layers of conducting material 210, 212, 214 of conducting member 208 may be in electrical contact with each other. Accordingly, eddy currents may pass outwardly from center layer 210 toward outermost layers 214. Eddy currents may concentrate in the outermost layers of conducting member 208, as indicated by arrows 232 in FIG. 4B. In this example, a frequency-dependent damping force may be generated (using the above equations) that is dependent on the resistance and magnetic permeability of essentially only outermost layers 214.

As described above with respect to conducting member 108, the configuration of conducting layers 210, 212, 214 may be selected in order to adjust the frequency-dependent damping force generated on conducting member 208 above the critical frequency of vibration. The critical frequency for conducting member 208 may be selected based on the thicknesses 220, 222, 224 and material characteristics of layers 210, 212, 214, respectively, as described above. Additionally, the substantially constant damping force applied below a critical frequency may be selected based on the thicknesses 220, 222, 224 and material characteristics (i.e. resistance and magnetic permeability) of layers 210, 212, 214, together with the selected strength and area of the magnetic field intersecting the conducting member 108 as indicated by Equation 12

For example, eddy current loops flowing through a layer of high resistivity may be smaller than eddy current loops flowing through a layer of low resistivity. If the permeabilities of all layers are essentially the same and if the resistivities of the inner layers 212 and 210 are the same, then if the conducting material of outermost layer 214 is selected to have a higher resistivity than the conducting material of the innerlayers, eddy currents generated in conducting member 208 are diminished as the skin effect causes those currents to concentrate less in the outermost layers 214 when compared to the concentration that would occur when the outer layer material was the same as the inner layers. This may cause a decrease in the damping force generated in conducting member 208 and an increase in the critical frequency. Therefore, the conducting material and thickness of layers 210, 212, 214 of conducting member 208 may be selected to generally decrease damping force and to increase the critical frequency of vibration of the payload.

Alternatively, if the permeabilities of all layers are essentially the same and if the resistivities of the inner layers 212 and 210 are the same, if the conducting material of outermost layer 214 is selected to have a lower resistivity than the conducting material of the inner layers, eddy currents generated in conducting member 208 are enlarged as the skin effect causes those currents to concentrate more in the outermost layer 214 when compared to the concentration that would occur when the outer layer material was the same as the inner layers. This may increase the damping force generated in conducting member 208 and cause a decrease in the critical frequency. Therefore, the conducting material and thickness of layers 210, 212, 214 of conducting member 208 may be selected to generally increase damping force and to decrease the critical frequency of vibration of the payload.

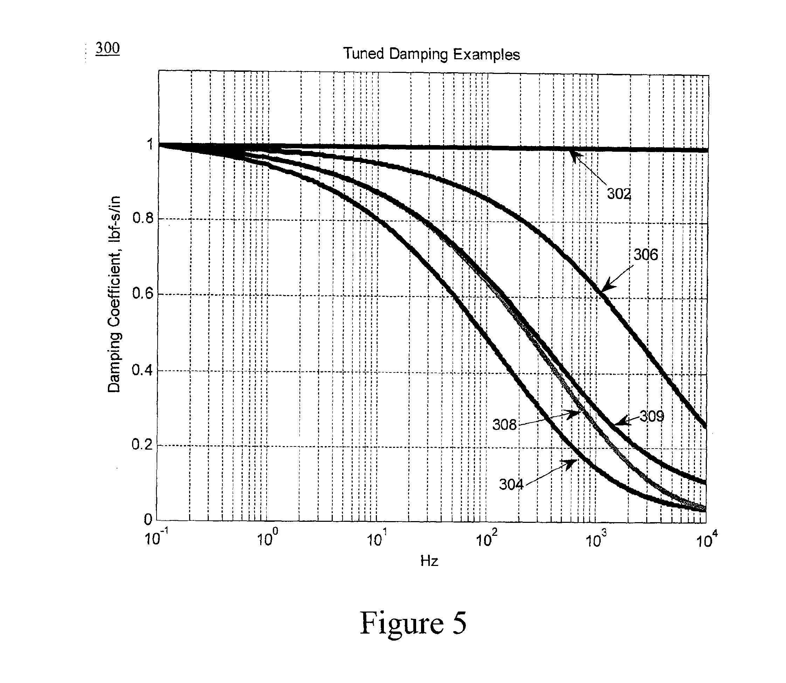

FIG. 5 shows a graph 300 of the damping rate (i.e. damping coefficient) of five exemplary damping apparatus. The first damping apparatus is a hypothetical damping apparatus having a constant damping rate across all frequencies. The second damping apparatus is a magnetic damper having a conducting member formed from a single conducting material (e.g., conducting member 108) with first resistivity and first thickness. The third damping apparatus is a magnetic damper having a conducting member formed from a single conducting material with second resistivity greater than first resistivity and second thickness greater than first thickness. The fourth damping apparatus is a magnetic damper having a conducting member including an inner layer of the first conducting material symmetrically sandwiched between outer layers of the second conducting material. The fifth damping apparatus is a magnetic damper having a conducting member including an inner layer of the second conducting material symmetrically sandwiched between outer layers of the first conducting material, and such that the total thicknesses of the first and second material layers are the same as those of the fourth apparatus. Each layer of the fourth and fifth damping apparatus is in electrical contact with the others, as described above with respect to conducting member 208.

Graph 300 depicts a graph of the frequency-dependent damping rate vs. the frequency of vibration for the conducting members of five exemplary damping apparatus. Line 302 depicts the damping rate for the first hypothetical damping apparatus having a constant damping rate across all frequencies. Line 304 depicts the damping rate for the second damping apparatus having the conducting member formed from a single conducting material of first resistivity and of first thickness. Line 306 depicts the damping rate for the third damping apparatus, having the conducting member formed from a single conducting material of second resistivity larger than first resistivity and of second thickness larger than first thickness. Line 308 depicts the damping rate for the fourth damping apparatus, having the conducting member formed from an inner layer of the first conducting material symmetrically sandwiched between outer layers of the second conducting material. Line 309 depicts the damping rate for the fifth damping apparatus, having the conducting member formed from an inner layer of the second conducting material symmetrically sandwiched between outer layers of the first conducting material.

As shown in graph 300, the line 302 corresponding to the first damping apparatus experiences no change in damping rate throughout the range of frequencies. The line 304 corresponding to the second damping apparatus experiences a decrease in damping rate, as the frequency progresses above the critical frequency of the second damping apparatus. The line 306 corresponding to the third damping apparatus also experiences a decrease in damping rate as the frequency progresses above the critical frequency of the third damping apparatus. Since the resistivity and thickness of the conducting member in the second damping apparatus are such that the critical frequency of the second apparatus is approximately 10 Hz and since the resistivity and thickness of the conducting member in the third damping apparatus are such that the critical frequency of the third apparatus is approximately 200 Hz, the rate of damping over high frequencies provided by the second apparatus is much less than the damping rate provided over high frequencies by the third apparatus. The designs for the conducting members used in the fourth apparatus and fifth apparatus are chosen such that the effective critical frequency for both apparatus is approximately 30 Hz. Because this critical frequency is between the critical frequencies of the second and third apparatus, the damping rate provided over high frequencies by the fourth and fifth apparatus is greater than that provided by the second apparatus and less than that provided by the third apparatus. Also, while the total thickness of the first material and the total thickness of the second material is the same for both the fourth apparatus and the fifth apparatus, because the conducting member in the fourth apparatus has the low resistivity first material in the inner layer and the high resistivity second material in the outer layers, and because the conducting member in the fifth apparatus has the high resistivity second material in the inner layer and the low resistivity first material in the outer layers, the damping rate provided over very high frequencies by the fourth apparatus is less than that provided by the fifth apparatus.

The examples shown in Figure 5 illustrate how the invention can be used to tune the damping rate to provide a more desirable dependence on frequency. For instance, it will be understood by one of skill in the art that a payload subject to vibration may have an associated resonant frequency. Providing a damping force to a payload vibrating substantially above its resonant frequency may result in "damper lockup," i.e. the damping force transmitting energy to the vibrating payload, rather than absorbing vibrational energy. As such. it may be desirable to reduce the damping force provided to the payload when the payload vibrates above its resonant frequency, thereby allowing the payload and damping apparatus to act as an isolator. Accordingly, the above exemplary damping apparatus 200 may be configured to minimize the damping force provided above the resonant frequency of the payload, for example, by making the critical frequency of the damping apparatus equivalent to the resonant frequency. In this configuration, damping apparatus 200 may minimize damping force above resonance, and reduce damper lockup.

It will also be understood by one of ordinary skill in the art that a payload may also have a higher order second resonance that may benefit by providing some reduced damping at the higher second resonance in addition to the damping provided at the lower frequency fundamental resonance. In this configuration, damping apparatus 200 may optimize damping force above the fundamental resonance such that damping over high frequencies is reduced enough to avoid "damper lockup" while still made large enough to provide sufficient damping of the higher second resonance.

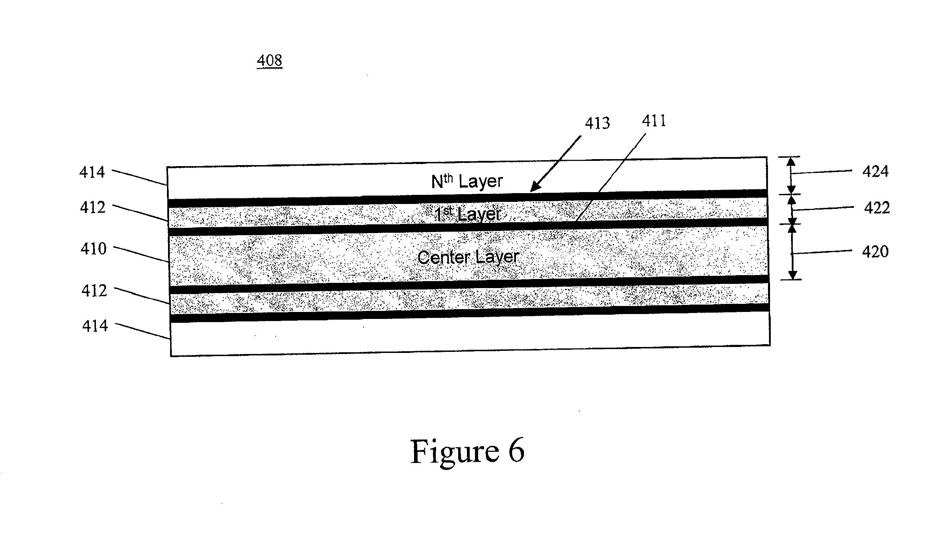

FIG. 6 is a diagram of an alternative conducting member 408 of an exemplary damping apparatus in accordance with the present invention. As described above, conducting member 408 may be coupled to a payload subject to vibration.

As shown, conducting member 408 is formed of layers of conducting material. In an exemplary embodiment, conducting member 408 includes inner or center layer 410, first outer layers 412, and last outer layers 414. Each layer 410, 412, 414 of conducting member 408 is separated by a respective insulating layer 411, 413. Each conducting layer 410, 412, 414 of conducting member 408 may be formed from different conducting materials. Optionally, conducting member 408 may be layered symmetrically, such that it includes center layer 410 formed from a first conducting material, a pair of outer layers 412 formed on either side of center layer 410 from a second conducting material, and a pair of outermost layers 414 formed on either side of outer layers 412 from a third conducting material. Insulating layers 411, 413 may extend throughout the entire area between conducting layers 410, 412, 414. Insulating layers 411, 413 may prevent the passage of current from one conducting layer to another.

Each conducting layer 410, 412, 414 may have a predetermined thickness 420, 422, 424, respectively. The thicknesses 420, 422, 424 of layers 410, 412, 414, respectively, may be selected to adjust the frequency-dependent damping force generated on conducting member 408, as described above with respect to conducting member 208. Layers 410, 412, 414 of conducting member 408 may be formed from predetermined conducting materials or combinations of conducting materials. Exemplary conducting materials for layers 410, 412, 414 may include copper, nickel, aluminum, or beryllium. As described above with respect to conducting member 208, the conducting materials of layers 410, 412, 414 may be selected to adjust the frequency-dependent damping force generated on conducting member 408. Insulating layers 411, 413 may be formed from any suitable insulating material or combination of materials. Exemplary insulating materials for layers 411, 413 include kapton, ceramic coatings, anodize coatings, and other similar materials. Conducting member 408 may be formed from the same processes described with respect to conducting member 208.

It will be understood that the number of insulating layers and conducting layers shown in FIG. 6 is illustrative and not limiting. It is contemplated that conducting member 408 may have any number of conducting layers. Additionally, although layers 410, 412, 414 are described as comprising different conducting materials, it will be understood that layers of conducting member 408 may be formed from the same conducting material or combination of materials.

The configuration of conducting layers 410, 412, 414 and insulating layers 411, 413 may similarly be configured in order to adjust the frequency-dependent damping force generated on conducting member 408, as described above with respect to conducting member 208. The presence of insulating layers 411, 413 may provide a desirable profile for the change in the frequency above the critical frequency of conducting member 408.

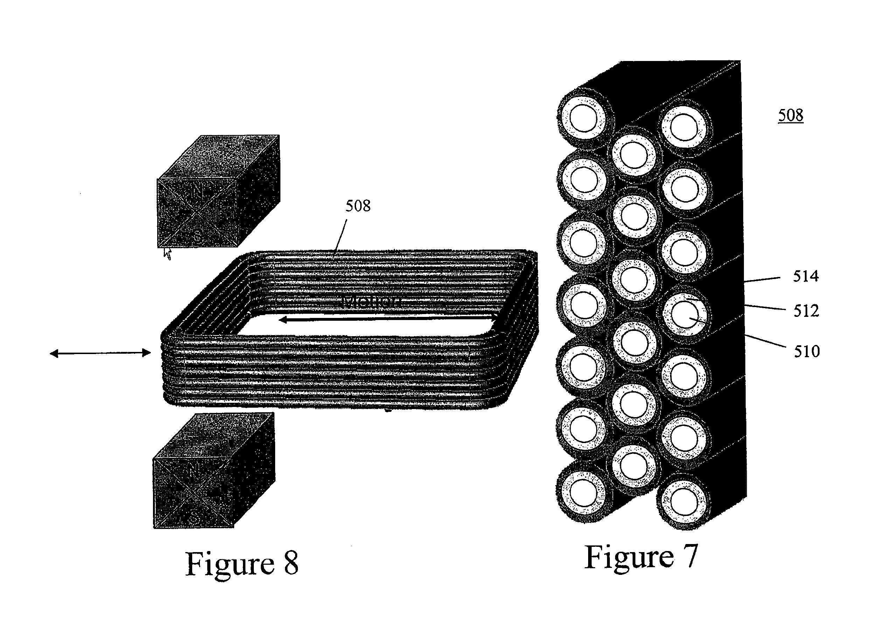

FIG. 7 is a diagram of another alternative conducting member 508 of an exemplary damping apparatus in accordance with the present invention. Conducting member 508 may be coupled to a payload subject to vibration.

As shown, conducting member 508 is formed of a plurality of conductive wires, each conductive wire having multiple layers of conducting material. In an exemplary embodiment, each wire of conducting member 508 includes inner or center layer 510, first outer layer 512, and last outer layer 514. The wires of conducting member 508 may be arranged in a closed loop, as illustrated in FIG. 8. As described above with respect to conducting members 208 and 408, conducting layers 510, 512, 514 of conducting member 508 may or may not be separated by insulating layers (not shown) to adjust the frequency-dependent damping force. Additionally, individual wires of conducting member 508 may be insulated from each other as desired to adjust the frequency-dependent damping force. Each conducting layer 510, 512, 514 of the wires of conducting member 508 may be formed from different conducting materials.

As illustrated in FIG. 7, the wires of conducting member 508 are formed such that conducting layer 510 extends a first radial distance, conducting layer 512 extends a second radial distance around conducting layer 510, and conducting layer 514 extends a third radial distance around conducting layer 514. Each conducting layer 510, 512, 514 may have a predetermined radial thickness. The thicknesses of layers 510, 512, 514 may be selected to adjust the frequency-dependent damping force generated on conducting member 508, as described above with respect to conducting member 208. Layers 510, 512, 514 of each wire of conducting member 508 may be formed from predetermined conducting materials or combinations of conducting materials. Exemplary conducting materials for layers 510, 512, 514 may include copper, nickel, aluminum, or beryllium. As described above with respect to conducting member 208, the conducting materials of layers 510, 512, 514 may be selected to adjust the frequency-dependent damping force generated on conducting member 408. Methods for forming conducting member 508 as described above will be understood by one of ordinary skill in the art from the description herein.

It will be appreciated that the number and arrangement of wires of conducting member 508 shown in FIG. 7 is illustrative and not limiting. It will further be appreciated that the number and shape of conducting layers shown in FIG. 7 is illustrative and not limiting. It is contemplated that the wires of conducting member 508 may have any number of conducting layers. Additionally, although layers 510, 512, 514 are described as comprising different conducting materials, it will be appreciated that layers of conducting member 508 may be formed from the same conducting material or combination of materials.

FIG. 8 shows the interaction between magnets 504 and conducting member 508 of an exemplary damping apparatus 500 in accordance with an aspect of the present invention. As described above with respect to conducting members 208 and 408, conducting member 508 may vibrate at a certain frequency in response to the vibration of a payload. As described above, movement of conducting member 508 within the magnet field in gap 506 generates eddy currents in conducting member 508. Due to the skin effect, as described above, the depth at which eddy currents flow in layers 510, 512, 514 is dependent on the frequency of the eddy currents, and therefore is dependent on the frequency of vibration of conducting member 508.

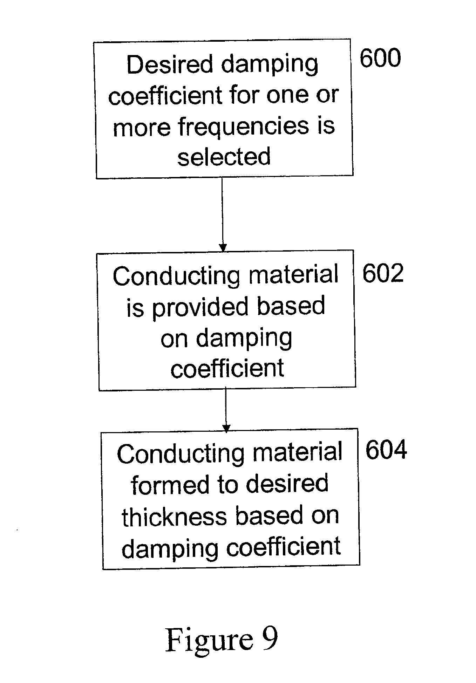

FIG. 9 is an exemplary method for forming conducting members for use in damping apparatus will now be described in accordance with aspects of the present invention. It will be understood by one of ordinary skill in the art that one or more of the following steps may be omitted.

In step 600, a desired damping coefficient is selected for one or more frequencies. In an exemplary embodiment, a damping coefficient for a conducting member to be formed is selected for one or more frequencies based on the desired damping response of the conducting member. For example, a damping coefficient may be selected for a frequency of vibration at which it is desired that the conducting member begin to lower the damping force it provides to the payload. It will be understood that multiple desired damping coefficients may be selected to define the damping response for the conducting member over a broad range of frequencies.

In step 602, a conducting material for the conducting member is provided based on the damping coefficient. In an exemplary embodiment, the magnetic permeability and resistivity for conducting materials is considered. The magnetic permeability and resistivity are considered to determine whether the conducting material is suitable for use in forming a conducting member having the selected damping coefficient, in accordance with the above-described equations. Additionally, other requirements for the conducting member may be considered in providing the conducting material such as, for example, operating temperature. A suitable conducting material is then chosen to form the conducting member.

In step 604, the conducting material is formed to a predetermined thickness based on the damping coefficient. In an exemplary embodiment, the conducting material is formed to a predetermined thickness in order to form a conducting member. The conducting member may be formed in accordance with any of the processes described above. The thickness may be predetermined based such that the conducting member will have the selected damping coefficient at the corresponding frequency, in accordance with the above-described equations. Additionally, other requirements for the conducting member may be considered in choosing the thickness of the conducting material such as, for example, geometric shape, size, and weight restrictions for the conducting member.

For conducting members having multiple layers of conducting material, it will be understood by one of ordinary skill in the art that steps 602-604 may be repeated multiple times to obtain multiple layers of conducting material having predetermined thicknesses. Additionally, it will be understood that the materials and thicknesses for all layers of the conducting member must be considered in designing a conducting member having the desired damping response.

Furthermore, it will be understood by one of ordinary skill in the art that other factors may be taken into account in addition to the above steps in forming conducting members in accordance with aspects of the present invention. The recitation of the above exemplary steps is not meant to exclude considerations of other factors such as operating temperature, damper geometry, magnetic strength, size and weight constraints, cost, and ease of manufacture.

Although the invention is illustrated and described herein with reference to specific embodiments, the invention is not intended to be limited to the details shown. Rather, various modifications may be made in the details within the scope and range of equivalents of the claims and without departing from the invention.

**Claims**

1. A damping apparatus comprising:

    at least one pair of magnets defining a gap therebetween; and
    a conducting member coupled to a payload and positioned within the gap, the conducting member configured to vibrate in response to a vibration of the payload,
    and the conducting member comprising a conducting material,
    wherein vibration of the conducting member generates eddy currents in the conducting member, the eddy currents generating a frequency-dependent damping force,
    the frequency-dependent damping force is adjustable based on the conducting material and a thickness of the conducting member, and
    the conducting material and the thickness are selected to adjust the frequency-dependent damping force.

2. The damping apparatus of claim 1, wherein the conducting member comprises:

    - a first layer of a first conducting material having a first thickness; and a second layer of a second conducting material having a second thickness, the second layer adjacent the first layer; and particularly an insulating layer between the first layer and the second layer; or
    - a plurality of conducting wires, each conducting wire comprising the first layer of the first conducting material and the second layer of the second conducting material; or
    - a planar inner layer of the first conducting material; and a pair of planar outer layers of the second conducting material, the outer layers of the pair positioned on opposite sides of the inner layer; or
    - a planar inner layer of the first conducting material; and two or more pairs of planar outer layers, each pair of outer layers comprising a different conducting material, the outer layers of each pair positioned on opposite sides of the inner layer; or
    - one or more conducting wires

3. The damping apparatus of claim 2, wherein the first and second conducting materials and the first and second thicknesses are selected to lower the frequency-dependent damping force above a predetermined frequency of vibration of the payload.

4. The damping apparatus of claim 3, wherein the predetermined frequency of vibration of the payload is the resonant frequency of the payload.

5. The damping apparatus of one of the claims 2 to 4, wherein:

    the first conducting material has a first resistivity;
    the second conducting material has a second resistivity different from the first resistivity.

6. The damping apparatus of one of the claims 2 to 5, wherein the second layer comprises:

    one or more outer layers surrounding the inner layer, each outer layer comprising a different conducting material.

7. The damping apparatus of claim 6, wherein the one or more outer layers have different respective thicknesses.

**8.** The damping apparatus of one of the claims 2 to 7, wherein the two or more pairs of planar outer layers have different respective thicknesses.

**9.** The damping apparatus of one of the preceding claims, further comprising:

a plurality of pairs of magnets defining a plurality of gaps therebetween; and
a plurality of conducting members coupled to the payload, each conducting member positioned within one of the plurality of gaps.

**10.** The damping apparatus of claim 9, wherein:

each of the plurality of conducting members comprises a respective conducting material; and
the respective conducting materials of two or more of the plurality of conducting members are different.

**11.** The damping apparatus of claim 9, wherein:

each of the plurality of conducting members has a respective thickness; and
the respective thicknesses of two or more of the plurality of conducting members are different.

**12.** The damping apparatus of one of the preceding claims, wherein:

the conducting material is a conducting vane and the conducting vane comprising a plurality of layers of conducting material,
the frequency-dependent damping force is adjustable based on the materials and
the thicknesses of the plurality of layers of conducting material, and
the materials and the thicknesses of the plurality of layers of conducting material are selected to adjust the frequency-dependent damping force.

**13.** The damping apparatus of claim 12, wherein the conducting materials and the thicknesses are selected to lower the frequency-dependent damping force above a predetermined frequency of vibration of the payload.

**14.** A method of forming a conducting member for use in a magnetic damping apparatus, comprising the steps of:

selecting a desired damping coefficient for one or more frequencies of vibration of the conducting member;
providing a conducting material for the conducting member based on the desired damping coefficient; and
forming the conducting material to a predetermined thickness based on the desired damping coefficient.

Figure 1A

Figure 1B

104

130

B

Magnetic Field (B)
Current Source

132

Return Path

Motion

t

108

104

Figure 2A

108    130

B

Magnetic Field (B)
Current Source
(portion under B Field)

L

Return Path
(portion not under
B field)

w    132

Figure 2B

EP 2 327 905 A2

EP 2 327 905 A2

208

214 — Nth Layer — 224

212 — 1st Layer — 222

210 — Center Layer — 220

212

214

Figure 3

High Frequency                                    Low Frequency

Figure 4B                    Figure 4A

EP 2 327 905 A2

300

Tuned Damping Examples

Figure 5

413  411

414 — N$^{th}$ Layer — 424

412 — 1$^{st}$ Layer — 422

410 — Center Layer — 420

412

414

Figure 6

EP 2 327 905 A2

Figure 8

Figure 7

EP 2 327 905 A2

EP 2 327 905 A2

```
┌─────────────────────┐
│  Desired damping    │ 600
│ coefficient for one or
│  more frequencies is │
│      selected        │
└─────────────────────┘
          │
          ▼
┌─────────────────────┐
│ Conducting material │ 602
│  is provided based  │
│     on damping      │
│     coefficient     │
└─────────────────────┘
          │
          ▼
┌─────────────────────┐
│ Conducting material │ 604
│  formed to desired  │
│  thickness based on │
│  damping coefficient │
└─────────────────────┘
```

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 304974 A, Brennan